# EUROPEAN PATENT APPLICATION

(11) **EP 3 225 887 A1**
(43) Date of publication of application: **04.10.2017**
(21) Application number: 16382142.4
(22) Date of filing: 31.03.2016
(51) Int. Cl.: F16H 63/34

(54) **ELECTRONIC GEARSHIFT DEVICE**

(71) Applicant: Fico Triad, S.A., 08028 Barcelona (ES)
(72) Inventor: GIMENO GRANÉ, Santiago, 08232 Viladecavalls (ES); MORENO COLOM, Javier, 08232 Viladecavalls (ES); DI VIRGILIO, Vito, 08232 Viladecavalls (ES); FERRÉ RIPOLL, Jaume, TAICANG CITY (CN)
(74) Representative: ZBM Patents - Zea, Barlocci & Markvardsen

(57) **Abstract**

It comprises an actuator (200) for operating a vehicle transmission into different gearshift positions (P, R, N, D) through a driving element (300) releasably connected thereto, and an automatic gear switching assembly (400) for automatically engaging a specific one of said gearshift positions (P, R, N, D) under a given condition that comprises a releasable locking mechanism (500) for mutually releasably locking the driving element (300) and the actuator (200) under said condition. The releasable locking mechanism (500) comprises a solenoid (550) for keeping the driving element (300) and the actuator (200) attached to each other depending on its energizing state. Biasing means (910, 920, 930, 940) are provided for releasing the actuator (200) from the driving element (300) depending on said energizing state so as to cause the driving element (300) to be moved relative to the actuator (200) such that the vehicle transmission is operated into said specific gearshift position (P, R, N, D).

## Description

The present disclosure relates to electronic gearshift devices for operating motor vehicle transmissions.

### BACKGROUND

Electronic gearshift devices are commonly used for operating motor vehicle transmissions as they provide important advantages such as for example additional functions.

One of such additional functions in electronic gearshift devices is the so-called auto park function. With the auto park function, the vehicle transmission is driven into the parking gearshift position under given conditions, such as for example in case of failure of the power supply in the vehicle. When in such parking position, the vehicle is parked with the transmission locked so that the vehicle cannot move. Typically, when the vehicle transmission is the parking position, the parking or hand brake is applied.

In order to drive the vehicle transmission into the parking position, a power supply is usually provided such as at least one battery or at least one capacitor. For example, document US7832302 discloses a shift-by-wire shifter system for motor vehicles which defaults to the park position. This shifter system includes an electric motor that is powered by a power storage device to automatically move the vehicle shifter lever into the park position when a system failure occurs. The power storage device for supplying power to the electric motor may be a capacitor, connected to the vehicle power system, or it may be any other suitable electric power storage device such as, for example, a diode, a battery, or the like.

A major problem found with such known shift-by-wire shifter systems is ageing of the power storage device, mainly in batteries, which undesirably results in loss of power and even becoming not operational over time. □As a result, the vehicle transmission can not be shifted into the parking position as desired to prevent vehicle movement under an emergency condition such as power outage or system failure. In the case that the power storage device includes capacitors, their electrical charge has been shown to be rapidly reduced resulting in that the vehicle transmission can not be shifted into the parking position under said emergency condition.

There is thus a need for a gearshift device that is capable of shifting a motor vehicle transmission into a parking position under a given condition such as a power supply failure with which the above related problems are at least reduced.

### SUMMARY

An electronic gearshift device for motor vehicles is provided. The features of the present electronic gearshift allow the above described problems with prior art gearshift devices to be at least reduced while providing a number of significant advantages.

The present electronic gearshift device comprises an actuator for operating a motor vehicle transmission into different gearshift positions such as parking P, reverse R, neutral N, and drive D. Other gearshift positions may be also possible such as low L, overdrive OD, engine braking B, etc. The actuator may for example comprise an electric motor and it may be at least partially received inside a housing. Other kinds of actuators are not ruled out.

The motor vehicle transmission is operated by the actuator of the electronic gearshift device through a driving element that is releasably connected thereto. The driving element may for example comprise a control cable. Other kinds of driving elements are not ruled out.

The present electronic gearshift device further comprises an automatic gear switching assembly. Such automatic gear switching assembly is suitably adapted for automatically engaging a specific one of said different gearshift positions under a given condition such as an emergency condition, for example a system failure. In one non-limiting example, said specific one of said different gearshift positions is the parking gearshift position. Thus, for example, the present automatic gear switching assembly is adapted for automatically engaging the parking gearshift position under an emergency condition. Other gearshift positions and conditions are also possible.

The automatic gear switching assembly comprises a releasable locking mechanism for mutually releasably locking the driving element and the actuator under said given condition. Such releasable locking mechanism comprises a magnetic device that is adapted for keeping the driving element and the actuator attached to each other depending on the energizing state of the magnetic device.

The releasable locking mechanism also includes biasing means suitable for releasing the actuator from the driving element depending on said energizing state of the magnetic device. Release of the actuator from the driving element causes the driving element to be moved relative to the actuator such that the vehicle transmission is operated into said specific one of said different gearshift positions.

The magnetic device of the releasable locking mechanism may for example comprise a solenoid. The releasable locking mechanism may however comprise other different magnetic devices as long as they are suitable for causing the driving element to be moved relative to the actuator such that the vehicle transmission is operated into said specific one of said different gearshift positions.

Release of the actuator from the driving element depending on the energizing state of the magnetic device for driving the vehicle transmission into said specific gearshift position is carried out through an arm assembly. Said arm assembly is configured for releasably locking a retention element depending on the actuation of the releasable locking mechanism, as it will be explained hereinbelow. Operation of the arm assembly and the retention element is such that, when said given condition occurs, such as for example an emergency condition, e.g. failure in the power supply, the retention element is automatically released causing the driving element and the actuator to be released from each other.

At least two examples of the above mentioned arm assembly are envisaged. They are described hereinbelow.

In a first example, the arm assembly may include a movable post, a first arm, a second arm, and a retention arm. The post can be moved by the above mentioned releasable locking mechanism depending on its energizing state under said given condition. The first arm has one end that is hinged to a fixed portion of the housing and an opposite end that is hinged to the movable post. The second arm has one end that is hinged to the movable post and an opposite end that is hinged to the retention arm. The retention arm is suitably adapted to interact with the above mentioned retention element.

In a locked position, the retention element is locked in position by the retention arm causing the driving element and the actuator to be coupled with each other.

In an unlocked or released position, the retention element is released, and therefore allowed to move, by the retention arm. As a result, the driving element and the actuator are released from each other depending on the energizing state of the releasable locking mechanism.

In a second example, the arm assembly may include an arm structure that can be rotated around a joint by the releasable locking mechanism depending on its energizing state under the above mentioned given condition. The arm structure is hinged to the retention element.

In a locked position, the retention element is locked in position such that the driving element and the actuator are coupled with each other.

In an unlocked or released position, the retention element is released, and therefore allowed to move, causing the driving element and the actuator to be released from each other depending on the energizing state of the releasable locking mechanism. In this position, the actuator and the driving elements are kept released from each other under the emergency condition.

In both examples, the arm assembly may include at least one metal portion, such as a metal plate or a metal disc that may be formed in or attached to the movable post or it may be directly formed in or attached to a portion of the arm assembly. Other examples in which the movable post or a portion of the arm assembly are made of metal are also envisaged. Thus, the arm assembly is locked in position by the metal plate or disc, or the movable post itself, as it is attracted by the magnetic device when it is energized, keeping the driving element and the actuator attached to each other.

The device may further include a loading mechanism for returning the actuator and the driving element back to the locking position in which they are attached to each other after they have been unlocked from each other when an emergency condition occurs.

In one example of the loading mechanism, it comprises a ramp portion and a pushing arm. The ramp portion is attached to or is part of the actuator and it is adapted for sliding of the retention element thereon. The pushing arm is configured to push the arm assembly and specifically the movable post so as to cause the retention element to be locked again in position.

It may be preferred that the actuator has an actuator part and the driving element has a driving part, with the releasable locking mechanism including a releasing part. The releasing part releasably couples the actuator part and the driving part with each other when actuated by the retention element as it is released.

As stated above, the releasable locking mechanism also includes biasing means for releasing the actuator from the driving element depending on the energizing state of the magnetic device. Such biasing means may for example comprise at least one spring, such as a compression spring, arranged to bias the driving element so as to be moved relative to the actuator such that the vehicle transmission is operated into said specific one of said different gearshift positions.

Further biasing means may be also provided to bias the releasing part. In other examples, other biasing means may be also provided to bias the retention element. In said cases, the biasing means may for example comprise compression springs.

A very simple gearshift device is obtained which is very efficient since no external power supply, such as batteries, capacitors and the like, is required for powering a motor for driving the releasing part for releasing the actuator part and the driving element from each other. The present gearshift device has been shown to be very advantageous as it does not require additional power for supplying a motor and also no transmission is required therefor.

Additional objects, advantages and features of examples of the present electronic gearshift device for motor vehicles will become apparent to those skilled in the art upon examination of the description, or may be learned by practice thereof.

### BRIEF DESCRIPTION OF THE DRAWINGS

Particular examples of the present electronic gearshift device for motor vehicles will be described in the following by way of non-limiting examples, with reference to the appended drawings, in which:
Figure 1 is a perspective view of a first example the present electronic gearshift device;
Figure 2 is a perspective view of the example of the present electronic gearshift device in figure 1 showing the loading mechanism in detail;
Figure 3 is a perspective view of a second example of the present electronic gearshift device; and
Figure 4 is a perspective view of the second example of the electronic gearshift device shown in figure 3 with parts removed to show internal elements thereof.

### DETAILED DESCRIPTION OF EXAMPLES

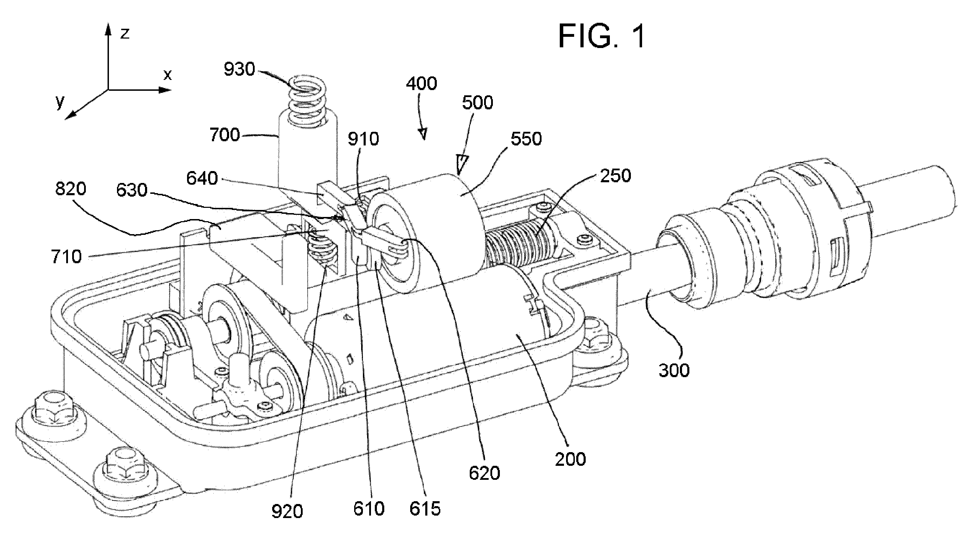

The figures 1-4 show two specific non-limiting examples of the present electronic gearshift device. The present electronic gearshift device is partially shown in said figures and has been indicated by reference numeral 100. The gearshift device 100 comprises a housing not shown in the drawings that includes an upper portion for receiving a gearshift lever for operating a motor vehicle transmission into different gearshift positions such as parking P, reverse R, neutral N, drive D, etc. The gearshift device 100 of the non-limiting examples is configured such that when a power failure occurs in the vehicle, the vehicle transmission is shifted automatically into the parking position P ("autopark" function).

Specifically, the gearshift device 100 comprises:
- an actuator which, in the present example, comprises a electric motor 200;
- an actuator part 210 that is coupled to the electric motor 200;
- a driving element which, in the present example, comprises a control cable 300 that is releasably connected to the motor 200;
- a driving part 310 that is coupled to the control cable 300;
- an automatic gear switching assembly 400 for automatically engaging the parking position P under an emergency condition, and
- biasing means that cooperate for releasing the actuator part 210 and the driving part 310 from each other.

The above parts will be described in the following.

The automatic gear switching assembly 400 comprises a releasable locking mechanism 500. The purpose of the releasable locking mechanism 500 in the electronic gearshift device 100 is to mutually releasably locking the motor 200 and the cable 300, and specifically the actuator part 210 and the driving part 310, under an emergency condition such as for example a power failure in the vehicle.

In the example shown in the drawings, the releasable locking mechanism 500 comprises a solenoid 550. In both non-limiting examples, the solenoid 550 is configured such as it is energized, the motor 200 and the cable 300, and specifically the actuator part 210 and the driving part 310, are attached to each other such that the vehicle transmission can be driven by the user as desired, for example, into any of the parking P, reverse R, neutral N, or drive D gearshift positions.

The biasing means comprise a release compression spring 940 that is configured for releasing the motor 200 from the cable 300, and specifically the actuator part 210 and the driving part 310, when the solenoid 550 is not energized, i.e. under an emergency condition, e.g. a failure in the power supply. The release compression spring 940 is arranged to drive a mechanism that will be described further below to cause the cable 300 to be moved away from the motor 200 such that the vehicle transmission is automatically driven into the parking gearshift position P when said emergency condition occurs ("autopark" function).

A retention element 700 is provided that can be moved along the axis Z shown in figure 1 against the action of a retention element compression spring 930. The retention element 700 is releasably retained in position depending on the energizing state of the solenoid 550 by means of an arm assembly 600 which will be described further below. The retention element 700 is configured to act on a releasing part 710. The releasing part 710 is provided for releasably coupling the actuator part 210 and the driving part 310 with each other. The releasing part 710 is urged by a releasing part compression spring 920.

When an emergency condition occurs, e.g. failure in the power supply, the retention element 700 is automatically released and urged to be moved along the axis Z shown in figure 1 by a retention element compression spring 930 to act on the releasing part 710 against the action of the releasing part compression spring 920. Urging of the releasing part 710 by the retention element 700 causes the motor 200 and the control cable 300, i.e. the actuator part 210 and the driving part 310, to be released from each other by the action of the release compression spring 940 such that the vehicle transmission is automatically shifted into the parking gearshift position ("autopark" function).

Two examples of arm assemblies 600 that cooperate with the solenoid 550 will be now described in connection with the figures of the drawings. The arm assembly 600 may however have other different configurations.

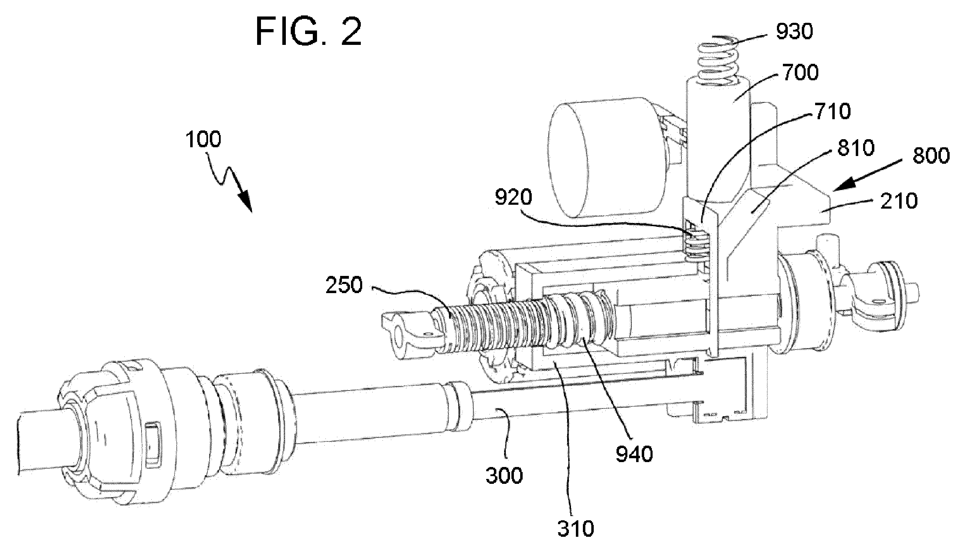

A first example of the above mentioned arm assembly 600 is shown in figures 1 and 2 of the drawings. In the first example, the arm assembly 600 comprises a post 610 that can be moved, i.e, displaced, depending on the energizing state of the solenoid 550. The arm assembly 600 in the first example also comprises first and second arms 620, 630 that are hinged at one end thereof to said movable post 610. The first arm 620 is also hinged to a fixed portion of the housing (not shown) so that it can be rotated around the vertical axis Z shown in figure 1. The second arm 630 is hinged to a retention arm 640 at the other end thereof. The retention arm 640 is arranged and guided as it is axially displaced along axis Y shown in figure 1 so as to interact with the above mentioned retention element 700. The retention element 700 is urged by the retention element compression spring 930 as stated above. The retention arm 640 is arranged to be inserted into a recess that is formed in retention element 700. When the retention arm 640 inserted into the recess of the retention element 700, the retention element 700 is locked against displacement in spite of the action of the retention element compression spring 930. A metal disc 615 is formed in or attached to the post 610 and it is arranged to be coupled to the solenoid 550 as it is energized.

With the above arrangement of the arm assembly 600 and the retention element 700, as the solenoid 550 is energized, i.e. under a normal condition, the post 610 is coupled to the solenoid 550 by the magnetic field created by the solenoid 550 that attracts the metal disc 615 of the post 610 with an arm assembly compression spring 910 being compressed between the arm assembly 600 and the solenoid 550.

In this position, that is, under the normal condition where the "autopark" function is not operated, the retention arm 640 is arranged inserted into the recess of the retention element 700 with the post 610 coupled to the solenoid 550 as stated above causing the retention element 700 to be locked in position also as described above. In this condition, the motor 200 and the cable 300, that is, the actuator part 210 and the driving part 310, are coupled with each other.

When an emergency condition occurs, such as for example a failure in the power supply, the solenoid 550 is not energized so its magnetic field is disabled causing the post 610, through the arm assembly compression spring 910 to be released therefrom. The post 610 is urged by the arm assembly compression spring 910 such that the post 610 is moved outwards to the solenoid 550 resulting in rotation of the second arm 630 retracting the retention arm 640 axially out of the recess of the retention element 700. As a result, the retention element 700 is automatically released by the action of the retention element compression spring 930 such that it is displaced downwards along axis Z shown in figure 1 acting on the releasing part 710 against the action of the releasing part compression spring 920. This causes the actuator part 210 and the driving part 310, and thus the motor 200 and the cable 300, to be released from each other by the action of the release compression spring 940 such that the vehicle transmission is automatically shifted into the parking gearshift position P ("autopark" function).

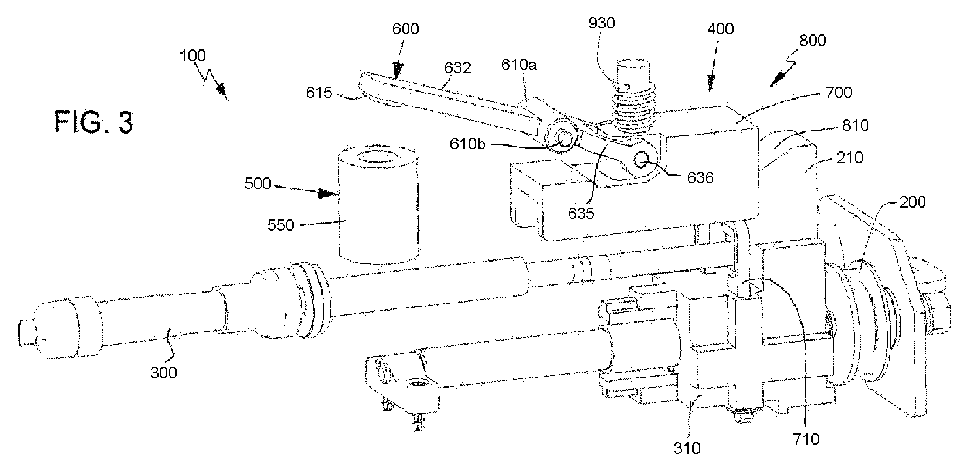

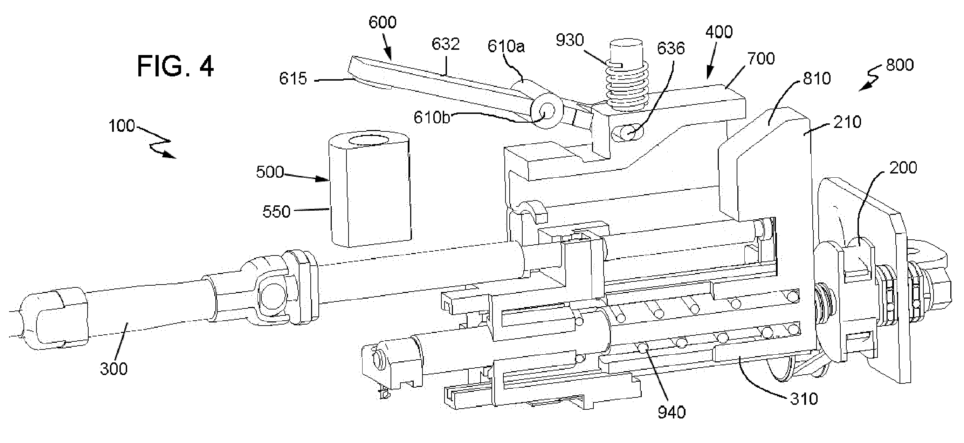

A second example of the above mentioned arm assembly 600 is shown in figures 3 and 4 of the drawings. In the second example, the arm assembly 600 comprises a single arm structure 632 and a joint 610a that can be rotated around a fixed pivot 610b. The joint 610a is hinged to a fixed portion of the above mentioned housing (not shown). The arm structure 632 can be thus rotated around the joint 610a depending on the energizing state of the solenoid 550 under said given condition, e.g. failure in the power supply. A metal disc 615 is attached to the arm structure 632 at one free end thereof. The metal disc 615 is coupled to the solenoid 550 as it is energized. Thus, the arm assembly 600 in this second example is locked in position when the metal disc 615 is attracted by the solenoid 550 when energized, i.e. under a normal condition ("autopark" function not enabled).

The arm structure 632 in this second example extends into two parallel sub-arms 635 which define a fork like arm assembly 635. The arm structure 632 is coupled to the retention element 700 through a hinge element 636 such that it can be displaced along axis X shown in figure 1. In turn, the hinge element 636 is hinged to the retention element 700 and it is also capable to be displaced thereto as it is displaceably housed therein as shown in figure 4 of the drawings. It is to be noted that, in contrast to the first example of the arm assembly 600, the second example of the arm assembly 600 does not include a retention arm 640 to interact with the retention element 700.

With the above arrangement of arm assembly 600 and retention element 700, as the solenoid 550 is energized, i.e. under the above mentioned normal condition, the arm structure 632 is attached to the solenoid 550 as the metal disc 615 is attracted by the magnetic field produced by the solenoid 550 when energized. In this position, the sub-arms 635 are positioned such that the retention element 700 does not urge the releasing part 710, causing the motor 200 and the cable 300 to be coupled with each other and thus the actuator part 210 and the driving part 310.

When the solenoid 550 is not energized, i.e. when an emergency condition occurs, such as a failure in the power supply of the motor vehicle, the arm structure 632 is detached through its metal disc 615 from the solenoid 550 and rotated around the axis 610b of the joint 610a by the action of the retention element compression spring 930, as shown in figures 3 and 4. This in turn causes the hinge element 636 to be displaced along the axis X shown in figure 1, to the left in the figures 3 and 4, and thus the sub-arms 635, as shown in figure 4. This results in that the retention element 700 is automatically released by the action of the retention element compression spring 930 such that it is displaced downwards along axis Z shown in figure 1 to act on the releasing part 710 against the action of the releasing part compression spring 920. As a result, the releasing part 710 is positioned such that the actuator part 210 and the driving part 310, and thus the motor 200 and the cable 300, are released from each other by the action of the release compression spring 940 such that the vehicle transmission is automatically shifted into the parking gearshift position P ("autopark" function).

It is to be noted that the retention element 700 is shaped such that once it is released and displaced under the action of the retention element compression spring 930 it acts on the releasing part 710 regardless of the gearshift position, that is, regardless of the position of the releasing part 710.

In both examples, a loading mechanism 800 is provided. In the example shown in figures 1 and 2, the loading mechanism 800 comprises a ramp portion 810 and a pushing arm 820. The ramp portion 810 is attached to or is part of the actuator part 210 of the motor 200 and it is adapted for sliding of the retention element 700 thereon. The pushing arm 820 is configured to push the movable post 610 so as to cause the retention element 700 to be locked again in position.

Thus the loading mechanism 800 serves the purpose of attaching again the actuator part 210 of the motor 200 and the driving part 310 of the cable 300 to each other after they have been detached from each other. The loading mechanism 800 is thus configured to return the gearshift device 100 back to its normal condition.

Referring again to the example shown in figures 1 and 2, as the motor 200 is actuated, a worn screw 250 is rotated causing the pushing arm 820 to push the movable post 610 while causing the retention element 700 to slide upwards in the figures on the ramp portion 810 until the retention element 700 is again positioned in the locked in position, with the retention arm 640 inserted again into the recess of the retention element 700, in the first example, and with the retention element 700 locked to the sub-arms 635 in the second example.

When the emergency condition has passed, the shape of the retention element 700 and the ramp portion 810 allows the motor 200 and the cable 300 to attached again to each other, and the motor 200 is driven into the parking position where the cable 300 is. In this situation when the emergency condition has passed, and the actuator part 210 of the motor 200 is detected to be in the parking gearshift position and the driving part 310 of the cable 300 is in another, different gearshift position R, N, D, etc, a control device, not shown, drives the actuator part 210 and thus the gearshift lever or rotation knob into the parking gearshift position P.

It is to be also noted that when no "autopark function" is being performed, when the vehicle transmission is driven from the parking gearshift position P into any other gearshift position, the releasing part 710 together with the actuator part 210 and the driving part 310 are all displaced laterally along axis X shown in figure 1.

Although only a number of particular examples of the present electronic gearshift device for motor vehicles have been disclosed herein, it will be understood by those skilled in the art that other alternative examples and/or uses and obvious modifications and equivalents thereof are possible.

For example, the releasing part 710 could be arranged to be positioned according to a number of different specific gearshift positions in addition to parking position P, such as for example reverse gearshift position R. On the other hand, the magnetic device has been described as comprising a solenoid 550 that is adapted for locking a retention element 700 by retaining an arm 620 when the solenoid 550 is energized, i.e. under normal conditions.

However, other equivalent devices could be used that work in an opposite manner, that is, retaining the arm 620 when they are not energized.

Thus, the present disclosure covers all possible combinations of the particular examples described.

Reference signs related to drawings and placed in parentheses in a claim, are solely for attempting to increase the intelligibility of the claim, and shall not be construed as limiting the scope of the claim.

The scope of the present disclosure should not be limited by particular examples, but should be determined only by a fair reading of the claims that follows.

## Claims

1. Electronic gearshift device (100) comprising:
- an actuator (200) for operating a motor vehicle transmission into different gearshift positions (P, R, N, D) through a driving element (300) releasably connected thereto; and
- an automatic gear switching assembly (400) for automatically engaging a specific one of said different gearshift positions (P, R, N, D) under a given condition, comprising a releasable locking mechanism (500) for mutually releasably locking the driving element (300) and the actuator (200) under said given condition, wherein the releasable locking mechanism (500) comprises:
- a magnetic device (550) adapted for keeping the driving element (300) and the actuator (200) attached to each other depending on the energizing state of the magnetic device (550); and
- biasing means (910, 920, 930, 940) for releasing the actuator (200) from the driving element (300) depending on said energizing state of the magnetic device (550) so as to cause the driving element (300) to be moved relative to the actuator (200) such that the vehicle transmission is operated into said specific one of said different gearshift positions (P, R, N, D).

2. The device (100) of claim 1, wherein the magnetic device of the releasable locking mechanism (500) comprises a solenoid (550).

3. The device (100) of claim 1 or claim 2, wherein it further comprises an arm assembly (600) adapted for releasably locking a retention element (700) depending on the energizing state of the releasable locking mechanism (500) such that, under said given condition, the retention element (700) is automatically released causing the driving element (300) and the actuator (200) to be released from each other.

4. The device (100) of claim 3, wherein the arm assembly (600) includes:
- a movable post (610) that can be moved by the releasable locking mechanism (500) depending on its energizing state under said given condition,
- a first arm (620) having one end hinged to a fixed joint and an opposite end hinged to the movable post (610), and
- a second arm (630) having one end hinged to the movable post (610) and an opposite end hinged to a retention arm (640) that is adapted to interact with the retention element (700),
whereby the retention element (700) is either locked in position by the retention arm (640) causing the driving element (300) and the actuator (200) to be coupled with each other, or the retention element (700) is released by the retention arm (640) causing the driving element (300) and the actuator (200) to be released from each other depending on the energizing state of the releasable locking mechanism (500).

5. The device (100) of claim 3, wherein the arm assembly (600) includes an arm structure (632) that can be rotated around a joint (610a) by the releasable locking mechanism (500) depending on its energizing state under said given condition, the arm structure (632) having one end hinged to the retention element (700),
whereby the retention element (700) is either locked in position causing the driving element (300) and the actuator (200) to be coupled with each other, or the retention element (700) is released causing the driving element (300) and the actuator (200) to be released from each other depending on the energizing state of the releasable locking mechanism (500).

6. The device (100) of any of the claims 3-5, wherein the arm assembly (600) includes at least one metal portion (615) that is attracted by the magnetic device (550) as it is energized causing the arm assembly (600) to be locked in position keeping the driving element (300) and the actuator (200) attached to each other.

7. The device (100) of any of the preceding claims, wherein it further includes a loading mechanism (800) for attaching the actuator (200) and the driving element (300) to each other after they have been detached from each other.

8. The device (100) of claim 7, wherein the loading mechanism (800) comprises a ramp portion (810) attached to or being part of the actuator (200) adapted for sliding of the retention element (700) thereon as the actuator (200) is operated causing the retention element (700) to be locked in position.

9. The device (100) of claim 7 or 8, wherein the loading mechanism (800) comprises a pushing arm (820) configured to push the arm assembly (600) as the actuator (200) is operated causing the retention element (700) to be locked in position.

10. The device (100) of any of the claims 3-9, wherein the actuator (200) has an actuator part (210) and the driving element (300) has a driving part (310), and wherein the releasable locking mechanism (500) further includes a releasing part (710) arranged for releasing the actuator part (210) and the driving part (310) from each other as it is actuated by the retention element (700) when released.

11. The device (100) of any of the preceding claims, wherein the biasing means comprise at least one spring (910, 920, 930, 940) arranged to bias the driving element (300) into said specific one of said different gearshift positions (P, R, N, D).

12. The device (100) of any of the claims 9-11, wherein the biasing means (920) are arranged to bias the releasing part (710).

13. The device (100) of any of the claims 3-12, wherein biasing means (930) are arranged to bias the retention element (700).

14. The device (100) of any of the preceding claims, wherein the actuator comprises an electric motor (200) and the driving element comprises a control cable (300).

15. The device (100) of any of the preceding claims, wherein the gear switching assembly (400) is configured for engaging a parking gearshift position (P) under said given condition.
